# EUROPÄISCHE PATENTSCHRIFT

(11) **EP 1 117 496 B1**
(45) Veröffentlichungstag und Bekanntmachung des Hinweises auf die Patenterteilung: **15.01.2003**
(21) Anmeldenummer: 99950569.6
(22) Anmeldetag: 29.09.1999
(51) Int. Cl.: B21D 22/20, B21D 24/16

(54) **FLUIDFORM**
FLUID FORM
MOULE A FLUIDE

(30) Priorität: 01.10.1998 DE 19845186
(43) Veröffentlichungstag der Anmeldung: 25.07.2001
(73) Patentinhaber: Binder Technologie AG, 9473 Gams (CH)
(72) Erfinder: BINDER, Carsten, CH-9473 Gams (CH); BINDER, Markus, CH-9473 Gams (CH)
(74) Vertreter: Richter, Thomas Kurt Reinhold
(86) Internationale Anmeldenummer: EP9907225
(87) Internationale Veröffentlichungsnummer: WO00020143

(56) Entgegenhaltungen:
- DE-A- 2 730 059
- DE-A- 19 626 692
- DE-C- 3 901 703
- GB-A- 2 151 527
- GB-A- 2 183 195

## Beschreibung

Die Erfindung bezieht sich auf eine Fluidform, die der Herstellung von Tiefziehteilen auf beliebigen Pressen dient und die aus einem Stempel, einem Niederhalter und einer bevorzugt mit Wasser befüllbaren Matrize besteht, wobei das tiefzuziehende Blech zwischen Matrize und Niederhalter quer geführt ist und wobei die jeweilige Fluidform als Kombinationswerkzeug für das Tiefziehformen und für mindestens einen weiteren Arbeitsgang ausgebildet ist. Die Erfindung betrifft ebenfalls ein Verfahren zur Herstellung von Tiefziehteilen.

Fluidformen sind seit geraumer Zeit bekannt und sie haben sich in der Praxis gut bewährt, insbesondere deshalb, weil mit ihnen im Gegensatz zu einfachen Tiefziehwerkzeugen verhältnismäßig große und in der Formgebung schwierige Tiefziehteile hergestellt werden können, d. h., es sind Tiefziehteile herstellbar, die mit Tiefziehwerkzeugen ohne Wasser od. dgl. nicht herstellbar waren. Da bei Tiefziehteilen wie auch bei Fließpreßteilen wegen des quer zur Fertigungsrichtung abstehenden Faltenrandes bzw. wegen des unregelmäßigen Randes bei Fließpreßteilen ein Beschneiden des jeweiligen Werkstückes erforderlich ist, fällt ein weiterer Arbeitsgang an, der zusätzliche Kosten mit sich bringt. Noch ungünstiger und unwirtschaftlicher wird es, wenn an den Wandflächen des tiefgezogenen Teiles räumliche Veränderungen und/oder Aussparungen gefertigt werden müssen.

Aus der DE-A-27 30 059 ist eine Fluidform der eingangs erwähnten Art bekannt. Als weiterer Arbeitsgang ist das Wandprofilieren des tiefgezogenen Blechs durch einen elastischen Körper vorgesehen. Bei dieser Fluidform ist jedoch weiterhin ein nachträgliches Beschneiden erforderlich.

Demgegenüber liegt der vorliegenden Erfindung die Aufgabe zugrunde, eine Fluidform anzugeben, die für das Beschneiden des tiefgezogenen Teiles und ggf. für weitere erforderlich werdende Arbeitsgänge keine zusätzlichen Werkzeuge benötigt.

Mit den Merkmalen des Hauptanspruches läßt sich die gestellte Aufgabe vorteilhaft lösen, denn durch die Ausbildung der Fluidform als Kombinationswerkzeug kann der tiefgezogene Teil ohne Mehraufwand an Zeit und Werkzeugkosten von den zu beseitigenden Randbereichen befreit, also beschnitten werden. Es können mit ein und demselben Werkzeug auch weitere Arbeitsgänge, wie das Profilieren von Wandbereichen, das Herstellen von Ausklinkungen, ein Lochen der Wände od. dgl. vollzogen werden. Durch die Anordnung einer in der Teilungsebene der jeweiligen Fluidform vorgesehen Membran, die das tiefgezogene Material gegen trennende Gestaltungen am oder im Stempel der Fluidform preßt, lassen sich die zuvor erwähnten Arbeitsgänge ohne zusätzliche Werkzeuge vollziehen. Die Unkosten für die Membran und auch die Kosten für eine besondere Gestaltung des jeweiligen Stempels bleiben bedeutungslos, wenn man die erzielten Vorteile entsprechend würdigt oder berücksichtigt, daß Arbeitsgänge in ein und derselben Fluidform vollzogen werden können, für die man früher mehrere Werkzeuge zur Verfügung stellen mußte, ganz zu schweigen von dem erhöhten Zeitaufwand, der kostenmäßig heute besonders belastend ist. Um den Tiefziehvorgang als solchen und/oder das Beschneiden regeln und steuern zu können, sind beide Teile der Matrize des Kombinationswerkzeugs mit steuer- und regelbaren Anschlüssen für das jeweilige Medium, z.B. für Wasser ausgestattet. Durch diese Maßnahme ist es möglich, mit unterschiedlichen Drücken zu arbeiten, wodurch - wie schon angedeutet - nicht nur der Tiefziehvorgang im Sinne der besonderen Gestaltung der herzustellenden Teile, sondern auch weitere Arbeitsgänge beeinflußt werden können.

Um insbesondere bei Tiefziehteilen mit verhältnismäßig großen Tiefen und schwieriger Formgebung die für gewöhnlich plane Membran nicht zu überlasten oder gar vorzeitig unbrauchbar zu machen, empfiehlt es sich, nach Anspruch 2 vorzugehen.

Gemäß Anspruch 3 ist eine trennende Stempelgestaltung von einer Art umlaufenden Sollbruchnut gebildet. Die Bezeichnung "Sollbruchnut" ist deshalb gewählt, weil in dem einen oder anderen Fall möglicherweise kein vollständiges Abtrennen des störenden Faltenrandes erfolgt, das Material aber mit Sicherheit soweit geschwächt ist, daß der unbrauchbare Teil bequem entfernt werden kann. Letzteres vor allem deshalb, weil bekanntlich schon verhältnismäßig geringe Oberflächeneinkerbungen mit Sicherheit zu Brüchen an gewollten Stellen führen.

Um die Wirkung der Sollbruchnut zu verbessern, empfiehlt es sich, nach den Ansprüchen 4 und 5 vorzugehen.

Für das Entfernen des in der Sollbruchnut verbleibenden Materials ist es von Vorteil, wenn man nach Anspruch 6 vorgeht. Damit wird nämlich der geschlossene Ring aufgeschnitten, so daß das Material bequem mit einem entsprechenden Werkzeug entfernt werden kann. Dies schließt aber nicht aus, daß man die Sollbruchnut nach Anspruch 7 ausbildet.

Um ein vollständiges Durchtrennen des abzuscherenden Materials zu erreichen, wird empfohlen, nach Anspruch 8 vorzugehen.

Wenn man eine Sollbruchnut vermeiden will, ist es für das Beschneiden zweckmäßig, sich die Lehre des Anspruches 9 zunutze zu machen. Eine verbesserte Trennwirkung läßt sich erzielen, wenn man nach den Angaben des Anspruches 10 vorgeht.

Auch bei der Kantentrennung ist es zweckmäßig, die Stärke des zu trennenden Materials zu berücksichtigen, wie sich dies aus Anspruch 11 ergibt.

Für den Fall, daß neben dem Beschneiden noch weitere Arbeitsgänge erforderlich sind, wird vorgeschlagen, sich der Merkmale des Anspruches 12 zu bedienen. Auch weitere formende Gestaltungen am Stempel gemäß Anspruch 14 sind möglich, um weitere Arbeitsgänge durchzuführen.

Wenn durch besondere Formen das Rückführen des Stempels Schwierigkeiten bereitet bzw. das tiefgezogene Teil nicht vom Stempel abgenommen werden kann, wird vorgeschlagen, nach Anspruch 13 vorzugehen. Eine hydraulische Betätigung der hier vorzusehenden Schieber ist als bevorzugt anzusehen.

Ein erfindungsgemäßes Verfahren zur Herstellung von Tiefziehteilen ergibt sich aus Anspruch 15. Die Vorteile des Verfahrens liegen darin, daß das tiefzuziehende Blech in der Vorverformungsstufe zunächst durch den Stempel und den unmittelbaren Wasserdruck im wesentlichen gleichmäßig in der gesamten Fläche verformt wird. Erst in der Endverformungsstufe, in der nur mehr ein geringer Materialfluß stattfindet, erfolgt die Verformung des Bleches durch eine druckbelastete Membran, so daß gleichzeitig mit der Endverformung auch ein Beschnitt des Bleches durch Einwirken der Membran über das tiefgezogene Material auf trennende Gestaltungen am Stempel erfolgen kann.

Vorteilhafte Ausgestaltungen des Verfahrens ergeben sich aus den Ansprüchen 16 und 17.

In der Zeichnung ist die Erfindung beispielsweise veranschaulicht; es zeigen:
- Fig. 1: eine erfindungsgemäß ausgestaltete Fluidform im Schnitt bei nicht eingefahrenem Stempel;
- Fig. 2: die gleiche Fluidform bei eingefahrenem Stempel und nicht vollständig verformten Blech;
- Fig. 3: die Fluidform bei eingefahrenem Stempel und endgültig verformten Blech;
- Fig. 4: eine Einzelheit im Bereich des Kreises in Fig. 3 in Form einer Sollbruchnut, gegenüber Fig. 3 stark vergrößert;
- Fig. 5: eine gegenüber Fig. 4 geänderte Ausführungsform;
- Fig. 6: eine Einzelheit in einer Sollbruchnut;
- Fig. 7 und 8: gegenüber einer Sollbruchnut geänderte Beschneidemöglichkeiten;
- Fig. 9: ein Beispiel für eine Wandprofilierung und
- Fig. 10: ein Beispiel für das Lochen des tiefgezogenen Teiles.

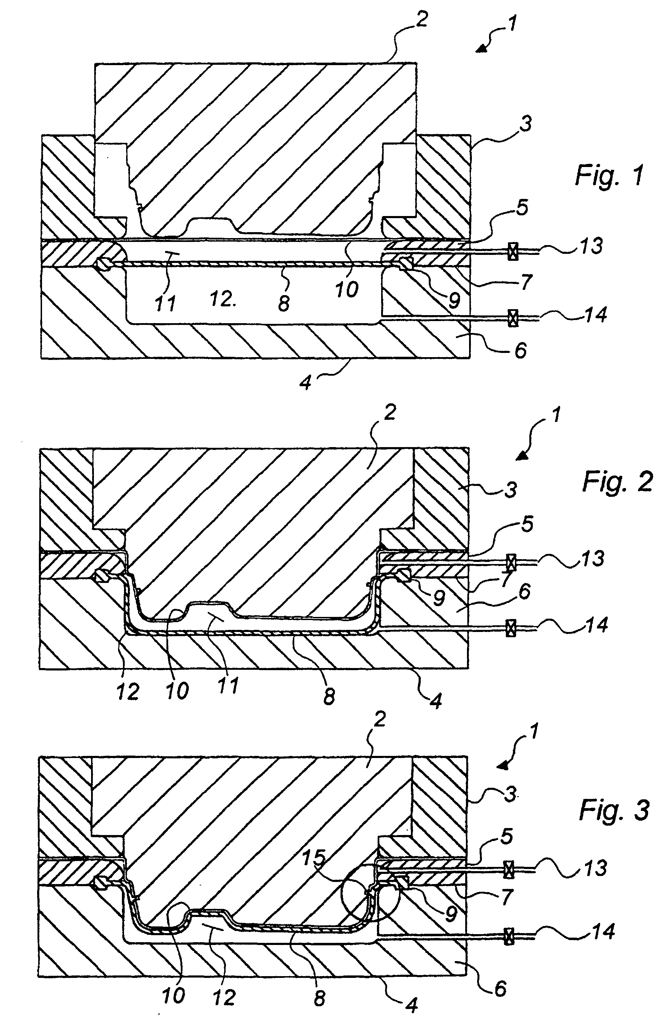

Wie sich aus den Fig. 1 bis 3 ergibt, besteht eine Fluidform 1 aus einem Stempel 2, einem Niederhalter 3 und aus einer Matrize 4, die auch Wasserkasten genannt wird. Die Matrize 4 ist zweiteilig ausgeführt und die beiden Teile 5, 6 nehmen in der Teilungsebene 7 eine Membran 8 auf, die mit umlaufenden Randprofilierungen 9 in den Teilen 5, 6 lagegesichert ist. Zwischen dem oberen Teil 5 der Matrize 4 und dem Niederhalter 3 ist das tiefzuziehende Blech 10 quer geführt.

Die von den Teilen 6, 8 und 10 gebildeten Räume 11, 12 sind mit steuer- und regelbaren Anschlüssen 13, 14 an ein Medium, z. B. Wasser angeschlossen, so daß sie voneinander unabhängig unter Druck gesetzt oder von Druck befreit werden können, was für den Tiefziehvorgang von Bedeutung ist.

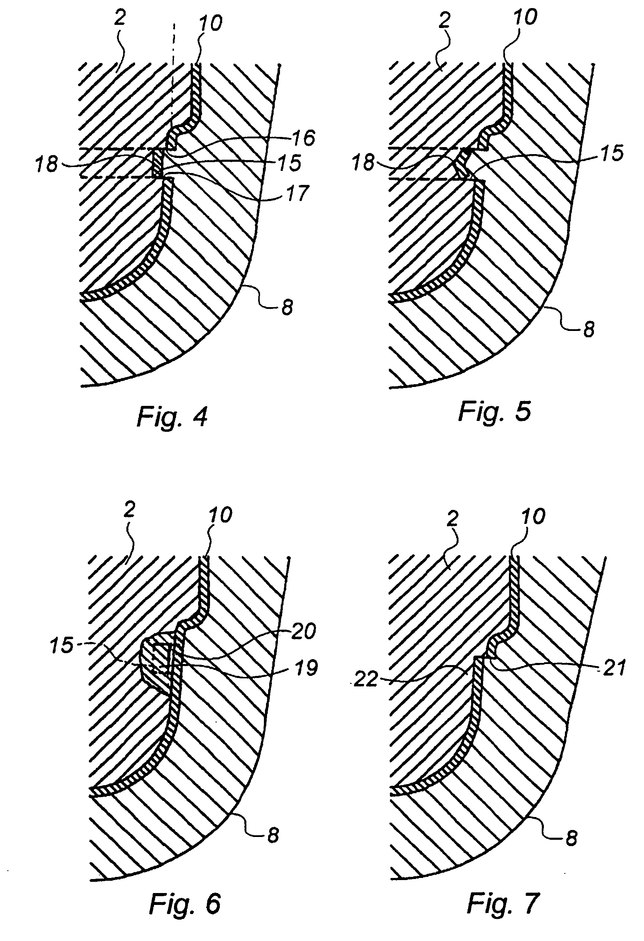

Aus Fig. 2 ist ersichtlich, daß durch das Einfahren des Stempels 2 in die Matrize 4 und durch Änderung der Wasserdrücke in den Räumen 11 und 12 einmal das Blech 10 an das Profil des Stempels 2 im wesentlichen zur Anlage gebracht wurde und zum anderen die Membran 8 etwa die dargestellte Formänderung erfahren hat. Durch entsprechende Drucksteigerung im Raum 12 und durch Verdrängung des Wassers aus dem Raum 11 schmiegt sich die Membran 8, wie aus Fig. 3 ersichtlich, satt an das vorverformte Blech 10 an und bringt letzteres in die endgültige Form bei gleichzeitigem Trennen bzw. Beschneiden auf Grund einer umlaufenden Sollbruchnut 15, die sich besonders gut aus den Fig. 4 und 5 ergibt.

Aus der Zeichnug ist deutlich zu erkennen, welche Bedeutung die steuer- und regelbaren Anschlüsse 13, 14 für den Tiefziehvorgang haben, der wesentlich durch die zu erzeugende Form beeinflußt wird. Bezüglich der Belastung der Membran ist noch zu bemerken, daß diese, um zerstörende Belastungen zu vermeiden, in etwa dem Hohlraum 12 angepaßt werden kann, wozu auf Fig. 2 verwiesen wird. Es versteht sich, daß durch diese Anpassung der Medienfluß zu den vom Anschluß entfernt liegenden Bereichen nicht behindert werden darf. Ebenso sollten scharfe Kanten in der Matrize 4 vermieden werden, die unmittelbar mit der Membran 8 in Berührung kommen.

Aus Fig. 4 ist ersichtlich, daß die vergrößert dargestellte Sollbruchnut 15 im Stempel 2 eine obere Kante 16 und eine untere Kante 17 aufweist, so daß die von der Flüssigkeit im Raum 12 belastete Membran 2 einen umlaufenden Streifen 18 aus dem Blech 10 abzutrennen vermag, also in ein und demselben Werkzeug ein Beschneiden des tiefgezogenen Teiles erfolgt.

Gemäß Fig. 5 ist die Sollbruchnut 15 am Grund derart gestaltet, daß der umlaufende Streifen 18 durch den Druck der Membran 8 schmäler wird, so daß die Reibung an den Sollbruchwänden absinkt, wodurch das Entnehmen des Streifens 18 aus der Nut 15 erleichtert wird.

Ein problemloses Entnehmen des umlaufenden Streifens 18 ist dann gegeben, wenn man nach Fig. 6 in der umlaufenden Sollbruchnut 15 einen Trennsteg 19 vorsieht, der die Tiefe der Nut ganz oder nahezu ausfüllt und dessen Schneide 20 in Stempelrichtung verläuft.

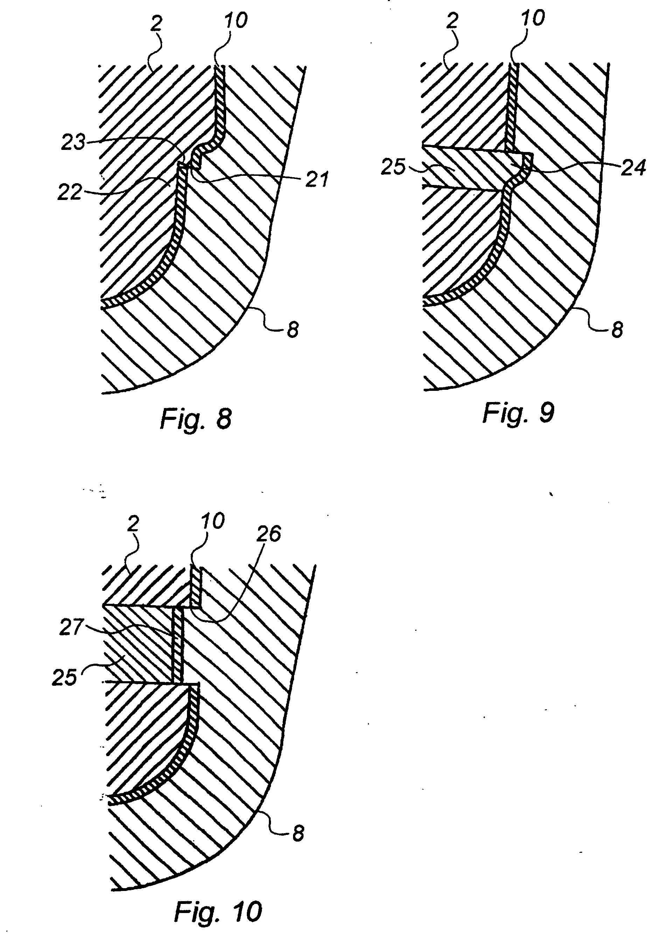

Die Fig. 7 und 8 zeigen zwei Bauarten zum Beschneiden ohne Sollbruchnut, d.h., eine solche ist durch eine umlaufende Kante 21 ersetzt, die gegenüber darunter liegenden Stempelbereichen 22 mindestens um die Stärke des Bleches 10 vorspringt. Bei der Ausführung gemäß Fig. 8 ist die Kante 21 als Schneide ausgebildet, indem auf sie eine Hinterschneidung 23 folgt.

Der Fig. 9 ist eine Wandprofilierung 24 zu entnehmen, die nicht umläuft, sondern nur an einer einzigen Stelle oder in Mehrfachanordnung vorgesehen ist. Das Beschneiden des tiefgezogenen Teiles, also des Bleches 10 erfolgt oberhalb der Wandprofilierung 24 und ist nicht dargestellt. Da bei dieser Ausführung der Stempel 2 nicht ausgefahren werden kann, sind entsprechend der Anzahl der Wandprofilierungen 24 Schieber 25 vorgesehen, die zweckmäßig hydraulisch betätigt werden. Schieber 25 sind auch dann erforderlich, wenn nach Fig. 10 Wandbereiche des tiefgezogenen Bleches 10 gelocht werden sollen bzw. mit mindestens einem Loch 26 versehen werden soll. Dabei sind der oder die Schieber 25 als Auswurfmittel für die abgetrennten Teile 27 gedacht. Auch hier erfolgt das Beschneiden mit einer Sollbruchnut 15 oder mit einer Kante 21, die nicht dargestellt sind.

## Patentansprüche

1. Fluidform, die der Herstellung von Tiefziehteilen auf beliebigen Pressen dient und die aus einem Stempel, einem Niederhalter und einer bevorzugt mit Wasser befüllbaren Matrize besteht, wobei das tiefzuziehende Blech zwischen Matrize und Niederhalter quer geführt ist und wobei die jeweilige Fluidform als Kombinationswerkzeug für das Tiefziehformen und für mindestens einen weiteren Arbeitsgang ausgebildet ist, **dadurch gekennzeichnet, daß** die Matrize (4) des Kombinationswerkzeuges (1) unterhalb der Auflageebene für das tiefzuziehende Blech (10) geteilt ist und in dieser Teilungsebene (7) eine in ihr lagegesicherte Membran (8) aufnimmt, die in der Endverformungsstufe über das tiefgezogene Material (10) auf trennende Gestaltungen (z. B. 15, 21, 24, 26) am Stempel (2) der jeweiligen Fluidform (1) einwirkt, und daß beide Teile (5, 6) der Matrize (4) des Kombinationswerkzeuges (1) mit steuer- und regelbaren Anschlüssen (13, 14) für das jeweilige Medium, z. B. für Wasser ausgestattet sind.

2. Fluidform nach Anspruch 1, **dadurch gekennzeichnet, daß** die in der Teilungsebene (7) der Matrize (4) lagegesicherte (vgl. 9) Membran (8) in ihrer Form entweder der Ausnehmung im unteren Teil (6) der Matrize (4) oder der Form des Stempels (2) in etwa angepaßt ist

3. Fluidform nach Anspruch 1 oder 2, **dadurch gekennzeichnet, daß** eine trennende Stempelgestaltung (vgl. 2) von einer Art umlaufenden Sollbruchnut (15) gebildet ist.

4. Fluidform nach Anspruch 3, **dadurch gekennzeichnet, daß** die Sollbruchnut (15) eine obere und eine untere Kante (16, 17) aufweist.

5. Fluidform nach Anspruch 4, **dadurch gekennzeichnet, daß** mindestens eine Kante (vgl. 16, 21) als Schneide ausgebildet ist.

6. Fluidform nach Anspruch 3, **dadurch gekennzeichnet, daß** in der Sollbruchnut (15) mindestens ein etwa in der Bewegungsrichtung des Stempels (2) verlaufender Trennsteg (19) vorgesehen ist.

7. Fluidform nach einem der Ansprüche 3 bis 6, **dadurch gekennzeichnet, daß** die Sollbruchnut (15) derart gestaltet ist, daß sie selbstauswerfend wirkt.

8. Fluidform nach einem der Ansprüche 3 bis 7, **dadurch gekennzeichnet, daß** die Tiefe der Sollbruchnut (15) mindestens der Materialstärke des tiefgezogenen Bleches (10) entspricht.

9. Fluidform nach Anspruch 1, **dadurch gekennzeichnet, daß** eine trennende Stempelgestaltung (vgl. 2) von einer umlaufenden, gegenüber darunter liegenden Bereichen (22) vorspringenden Kante (21) gebildet ist.

10. Fluidform nach Anspruch 9, **dadurch gekennzeichnet, daß** die vorspringende Kante (21) als Schneide ausgebildet ist, indem sie in einen hinterschneidenden unteren Absatz (vgl. 22) übergeht.

11. Fluidform nach Anspruch 9 oder 10, **dadurch gekennzeichnet, daß** die trennende und umlaufende Kante (21) am Stempel (2) quer zu seiner Bewegungsrichtung einen Abstand von den darunter liegenden Bereichen hat, der zumindest der Materialstärke des tiefgezogenen Bleches (10) entspricht.

12. Fluidform nach einem der Ansprüche 1 bis 11, **dadurch gekennzeichnet, daß** unterhalb der umlaufenden und trennenden Gestaltung (vgl. 15 oder 21) des Stempels (2) der Fluidform (1) an einzelnen Stellen des Stempels (2) formende und/oder trennende Gestaltungen (vgl. 24 oder 26) vorgesehen sind.

13. Fluidform nach Anspruch 12, **dadurch gekennzeichnet, daß** im Stempel (2) der formenden Gestaltung (vgl. 24) angepaßte hydraulische Schieber (25) vorgesehen sind.

14. Fluidform nach einem der vorhergehenden Ansprüche, **dadurch gekennzeichnet, daß** die Membran (8) in der Endverformungsstufe über das tiefgezogene Material (10) auf formende Gestaltungen am Stempel (2) der jeweiligen Fluidform (1) einwirkt.

15. Verfahren zur Herstellung von Tiefziehteilen auf beliebigen Pressen, bei dem
- zwei Räume einer Matrize, die voneinander durch eine in einer Teilungsebene der Matrize lagegsicherte Membran getrennt sind, bevorzugt mit Wasser befüllt werden,
- ein tiefzuziehendes Blech vorverformt wird, indem das Blech von einem Stempel in die Matrize in Richtung auf die Membran hin gegen den Druck des in dem einen Raum enthaltenen Wassers gedrückt wird, während Wasser aus dem anderen Raum abgelassen wird, wobei die Membran verformt wird, und
- das Blech endverformt wird, indem Wasser dem anderen Raum zugeführt wird, so daß die Membran das Blech gegen den Stempel drückt, während ein Randbereich des Blechs durch Wechselwirkung mit dem Stempel abgetrennt wird.

16. Verfahren nach Anspruch 15, **dadurch gekennzeichnet, daß** das Blech während der Endverformung gleichzeitig beschnitten, wandprofiliert, ausgeklinkt oder gelocht wird.

17. Verfahren nach Anspruch 15 oder 16, **dadurch gekennzeichnet, daß** die Verfahrensschritte in ein und demselben Werkzeug durchgeführt werden.

## Claims

1. Fluid mould which serves for the production of deep-drawn parts on any press and which consists of a male die, a holding-down device and a female die preferably fillable with water, wherein the sheet to be deep-drawn is guided transversely between female die and holding-down device and wherein the respective fluid mould is constructed as a combination tool for deep-draw moulding and for at least one further working process, **characterised in that** the female die (4) of the combination tool (1) is divided below the support plane for the sheet (10) to be deep drawn and receives in this dividing plane (7) a membrane (8) which is secured in position and which in the final forming stage acts by way of the deep-drawn material (10) on separating structures (for example, 15, 21, 24, 26) at the male die (2) of the respective fluid mould (1), and that both parts (5, 6) of the female die (4) of the combination tool (1) are equipped with controllable and regulable connections (13, 14) for the respective medium, for example, for water.

2. Fluid mould according to claim 1, **characterised in that** the membrane (8) secured in position in the dividing plane (7) of the female die (4) (cf 9) is approximately matched in its shape either to the recess in the lower part (6) of the female die (4) or to the shape of the male die (2).

3. Fluid mould according to claim 1 or 2, **characterised in that** a separating male die structure (cf 2) is formed by a form of encircling break-off groove (15).

4. Fluid mould according to claim 3, **characterised in that** the break-off groove (15) has an upper and a lower edge (16, 17).

5. Fluid mould according to claim 4, **characterised in that** at least one edge (cf 16, 21) is constructed as a cutting edge.

6. Fluid mould according to claim 3, **characterised in that** at least one separating web (19) extending approximately in the direction of movement of the male die (2) is provided in the break-off groove (15).

7. Fluid mould according to one of claims 3 to 6, **characterised in that** the break-off groove (15) is shaped in such a manner that it acts in self-ejecting manner.

8. Fluid mould according to one of claims 3 to 7, **characterised in that** the depth of the break-off groove (15) corresponds with at least the material thickness of the deep-drawn sheet (10).

9. Fluid mould according to claim 1, **characterised in that** a separating male die shape (cf 2) is formed by an encircling edge (21) protruding relative to regions (22) disposed thereunder.

10. Fluid mould according to claim 9, **characterised in that** the protruding edge (21) is constructed as a cutting edge **in that** it goes over into an undercut, lower offset (cf 22).

11. Fluid mould according to claim 9 or 10, **characterised in that** the separating and encircling edge (21) at the male die (2) has transversely to its direction of movement a spacing from the regions disposed thereunder, the spacing corresponding with at least the material thickness of the deep-drawn sheet (10).

12. Fluid mould according to one of claims 1 to 11, **characterised in that** shaping and/or separating structures (cf 24 or 26) are provided at individual locations of the male die (2) and below the encircling and separating structure (cf 15 or 21) of the male die (2) of the fluid mould (1).

13. Fluid mould according to claim 12, **characterised in that** hydraulic pushers (25) matched to the shaping structure (cf 24) are provided in the male die (2).

14. Fluid mould according to one of the preceding claims, **characterised in that** the membrane (8) acts in the final forming stage by way of the deep-drawn material (10) on shaping structures at the male die (2) of the respective fluid moulds (1).

15. Method of producing deep-drawn parts on any press, in which
- two spaces of a female die, which spaces are separated from one another by a membrane secured in position in a dividing plane of the female die and are filled preferably with water,
- a sheet to be deep-drawn is preliminarily deformed in that the sheet is pressed by a male die into the female die in direction towards the membrane against the pressure of the water contained in one space, whilst water is let out of the other space, wherein the membrane is deformed, and
- the sheet is finally deformed in that water is fed to the other space so that the membrane presses the sheet against the male die, whilst an edge region of the sheet is cut off by interaction with the male die.

16. Method according to claim 15, **characterised in that** the sheet during the final forming is simultaneously trimmed, wall-profiled, notched or apertured.

17. Method according to claim 15 or 16, **characterised in that** the method steps are performed in one and the same tool.

## Revendications

1. Dispositif de formage par fluide qui sert à la fabrication de pièces embouties sur des presses quelconques et qui comprend un poinçon, un serre-flan et une matrice pouvant être remplie de préférence avec de l'eau, la tôle à emboutir étant guidée dans le sens transversal entre matrice et serre-flan et le dispositif de formage par fluide étant conçu comme un outil combiné pour le formage par emboutissage et pour au moins une autre opération, **caractérisé par le fait que** la matrice (4) de l'outil combiné (1) est divisée au-dessous du plan d'appui de la tôle à emboutir (10) et loge, dans ce plan de division (7), une membrane (8) dont la position est assurée dans ledit plan de division et qui, dans la phase terminale de formage, agit sur des configurations séparatrices (15, 21, 24, 26, par exemple) au poinçon (2) du dispositif de formage par fluide (1) par l'intermédiaire de la matière emboutie (10), et **par le fait que** les deux parties (5, 6) de la matrice (4) de l'outil combiné (1) sont équipées de raccords (13, 14) permettant de commander et de régler le fluide, tel que de l'eau, par exemple.

2. Dispositif de formage par fluide selon la revendication 1, **caractérisé par le fait que** la membrane (8), dont la position est assurée (voir 9) dans le plan de division (7) de la matrice (4), est à peu près adaptée dans sa forme, soit à l'évidement dans la partie inférieure (6) de la matrice (4), soit à la forme du poinçon (2).

3. Dispositif de formage par fluide selon l'une des revendications 1 ou 2, **caractérisé par le fait qu'**une configuration de poinçon séparatrice (voir 2) est formée par une sorte de rainure de rupture périphérique (15).

4. Dispositif de formage par fluide selon la revendication 3, **caractérisé par le fait que** la rainure de rupture (15) présente une arête supérieure et une arête inférieure (16, 17).

5. Dispositif de formage par fluide selon la revendication 4, **caractérisé par le fait qu'**au moins une arête (voir 16, 21) est formée comme un tranchant.

6. Dispositif de formage par fluide selon la revendication 3, **caractérisé par le fait qu'**il est prévu, dans la rainure de rupture (15), au moins une patte de séparation (19) orientée à peu près dans la direction du déplacement du poinçon (2).

7. Dispositif de formage par fluide selon l'une des revendications 3 à 6, **caractérisé par le fait que** la rainure de rupture (15) est formée de façon à avoir une action d'auto-éjection.

8. Dispositif de formage par fluide selon l'une des revendications 3 à 7, **caractérisé par le fait que** la profondeur de la rainure de rupture (15) correspond au moins à l'épaisseur de la matière de la tôle emboutie (10).

9. Dispositif de formage par fluide selon la revendication 1, **caractérisé par le fait qu'**une configuration de poinçon séparatrice (voir 2) est formée par une arête (21) périphérique, saillante par rapport aux zones situées au-dessous (22).

10. Dispositif de formage par fluide selon la revendication 9, **caractérisé par le fait que** l'arête saillante (21) est formée comme un tranchant en passant à un talon inférieur en contre-dépouille (voir 22).

11. Dispositif de formage par fluide selon la revendication 9 ou 10, **caractérisé par le fait que** l'arête séparatrice et périphérique (21) présente au poinçon (2), dans le sens transversal à sa direction de déplacement, un écart par rapport aux zones situées au-dessous qui correspond au moins à l'épaisseur de la matière de la tôle emboutie (10).

12. Dispositif de formage par fluide selon l'une des revendications 1 à 11, **caractérisé par le fait qu'**il est prévu, au-dessous de la configuration périphérique et séparatrice (voir 15 ou 21) du poinçon (2) du dispositif de formage par fluide (1), des configurations permettant le formage et/ou la séparation (voir 24 ou 26) en différents endroits du poinçon (2).

13. Dispositif de formage par fluide selon la revendication 12, **caractérisé par le fait que** des vannes hydrauliques adaptées (25) à la configuration permettant le formage (voir 24) sont prévues dans le poinçon (2).

14. Dispositif de formage par fluide selon l'une des revendications précédentes, **caractérisé par le fait que** la membrane (8) agit, dans la phase terminale du formage, sur des configurations permettant le formage au poinçon (2) du dispositif de formage par fluide (1) correspondant par l'intermédiaire de la matière emboutie (10).

15. Procédé de fabrication de pièces embouties sur des presses quelconques, dans lequel
- deux espaces d'une matrice, qui sont séparés l'un de l'autre par une membrane dont la position est assurée dans un plan de séparation de la matrice, sont remplis de préférence avec de l'eau,
- une tôle à emboutir est préformée par pression de la tôle par un poinçon dans la matrice en direction de la membrane contre la pression de l'eau contenue dans un espace, tandis que l'eau est évacuée de l'autre espace, la membrane étant formée, et
- la tôle est formée de manière définitive en amenant de l'eau à l'autre espace de telle sorte que la membrane presse la tôle contre le poinçon, tandis qu'une zone limite de la tôle est séparée par interaction avec le poinçon.

16. Procédé selon la revendication 15, **caractérisé par le fait que** la tôle est simultanément coupée, profilée, mortaisée ou perforée pendant le formage terminal.

17. Procédé selon l'une des revendications 15 ou 16, **caractérisé par le fait que** les opérations du procédé sont effectuées dans un seul et même outil.
